# EUROPEAN PATENT APPLICATION

(11) **EP 4 350 543 A1**
(43) Date of publication of application: **10.04.2024**
(21) Application number: 22810589.6
(22) Date of filing: 25.05.2022
(51) Int. Cl.: G06F 21/36, G06F 21/84, G06F 3/0481

(54) **DISPLAY CONTROL METHOD AND APPARATUS, ELECTRONIC DEVICE, AND MEDIUM**

(30) Priority: 27.05.2021 CN 202110585884
(71) Applicant: Vivo Mobile Communication Co., Ltd., Dongguan, Guangdong 523863 (CN)
(72) Inventor: SUN, Chengrui, Hangzhou, Zhejiang 311100 (CN)
(74) Representative: Murgitroyd & Company
(86) International application number: PCT/CN2022/095015
(87) International publication number: WO 2022/247865

(57) **Abstract**

This application discloses a display control method and apparatus, an electronic device and a medium. The display control method includes: receiving a first input performed by a user on a target program identifier among N program identifiers; in response to the first input, updating a display parameter of the target program identifier; and in a case that the display parameter of the target program identifier meets a first preset condition, displaying target information; where the target information includes: a target program interface or a target program file of a target program indicated by the target program identifier; and N is a positive integer.

## Description

### CROSS-REFERENCE TO RELATED APPLICATION

This application claims priority to Chinese Patent Application No.202110585884.1, filed with the China National Intellectual Property Administration on May 27, 2021 and entitled "DISPLAY CONTROL METHOD AND APPARATUS, ELECTRONIC DEVICE AND MEDIUM", which is incorporated herein by reference in its entirety.

### TECHNICAL FIELD

The present application belongs to the technical field of data encryption, and specifically relates to a display control method and apparatus, an electronic device and a medium.

### BACKGROUND

Usually, a user can encrypt an application in an electronic device and set an unlock password, so that when the electronic device detects that a user taps an icon of the application, it can first display a password input interface, and only when the password entered by the user is the unlock password, the application is started and user data (for example, user data and files in the interface) in the application is displayed, so as to avoid leakage of user data.

However, since other users may see the password entered by the user, other users may also trigger the electronic device to start an application and display the user data in the application, which leads to leakage of user data.

In this way, the security of user data in the electronic device is poor.

### SUMMARY

The purpose of the embodiments of the present application is to provide a display control method and apparatus, an electronic device and a medium, which can solve the problem of poor security of user data in the electronic device.

According to a first aspect, an embodiment of the present application provides a display control method, the method including: receiving a first input performed by a user on a target program identifier among N program identifiers; in response to the first input, updating a display parameter of the target program identifier; and in a case that the display parameter of the target program identifier meets a first preset condition, displaying target information; where the target information includes: a target program interface or a target program file of a target program indicated by the target program identifier; and N is a positive integer.

According to a second aspect, an embodiment of the present application provides a display control apparatus, and the display control apparatus includes: a receiving module, an update module, and a display module. The receiving module is configured to receive a first input performed by a user on a target program identifier among N program identifiers. The update module is configured to: in response to the first input received by the receiving module, update a display parameter of the target program identifier. The display module is configured to: in a case that the display parameter of the target program identifier updated by the update module meets a first preset condition, display target information. The target information includes: a target program interface or a target program file of a target program indicated by the target program identifier; and N is a positive integer.

According to a third aspect, an embodiment of this application provides an electronic device. The electronic device includes a processor, a memory, and a program or an instruction that is stored in the memory and that can be run on the processor, where the program or the instruction is executed by the processor to implement the steps of the method in the first aspect.

According to a fourth aspect, an embodiment of this application provides a readable storage medium. The readable storage medium stores a program or instructions, and when the program or the instructions are executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction to implement the method in the first aspect.

In the embodiment of the present application, the electronic device may update a display parameter of the target program identifier according to a first input performed by a user on a target program identifier among N program identifier; and when the display parameter of the target program identifier meets a first preset condition, display a target program interface or a target program file of a target program indicated by the target program identifier. Since the electronic device can update the display parameter of the target program identifier according to the first input performed by the user on the target program identifier, and determine whether the display parameters meet the first preset condition, only after determining that the display parameter of the target program identifier meets the first preset condition, the display control apparatus displays the target program interface or target program file of the target program, that is, the user can trigger the electronic device to display the target program interface or target program file of the target program without inputting the unlock password. Therefore, it can prevent other users from seeing the unlock password input by the user, thus improving the security of user data in the electronic device.

### BRIEF DESCRIPTION OF DRAWINGS

FIG. 1 is a first schematic diagram of a display control method according to an embodiment of this application;
FIG. 2 is a first schematic diagram of an example of an interface of a mobile phone according to an embodiment of this application;
FIG. 3 is a second schematic diagram of an example of an interface of a mobile phone according to an embodiment of this application;
FIG. 4 is a second schematic diagram of a display control method according to an embodiment of this application;
FIG. 5 is a third schematic diagram of a display control method according to an embodiment of this application;
FIG. 6 is a third schematic diagram of an example of an interface of a mobile phone according to an embodiment of this application;
FIG. 7 is a fourth schematic diagram of a display control method according to an embodiment of this application;
FIG. 8 is a fourth schematic diagram of an example of an interface of a mobile phone according to an embodiment of this application;
FIG. 9 is a fifth schematic diagram of a display control method according to an embodiment of this application;
FIG. 10 is a fifth schematic diagram of an example of an interface of a mobile phone provided by an embodiment of this application;
FIG. 11 is a sixth schematic diagram of a display control method according to an embodiment of this application;
FIG. 12 is a sixth schematic diagram of an example of an interface of a mobile phone provided by an embodiment of this application;
FIG. 13 is a schematic structural diagram of a display control apparatus according to an embodiment of the present application;
FIG. 14 is a schematic diagram of a structure of an electronic device according to an embodiment of this application; and
FIG. 15 is a schematic diagram of hardware of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of obj ects is not limited. For example, there may be one or more first objects. In addition, in this specification and the claims, "and/or" represents at least one of connected objects, and a character "/" generally represents an "or" relationship between associated objects.

The display control method provided by the embodiments of the present application will be described in detail below through specific embodiments and application scenes with reference to the accompanying drawings.

The display control method provided in the embodiment of the present application can be applied to a scene where a user views user data.

Assuming that the user wants to view user data in encrypted program A, such as user data or files in interface A, the user can tap the program icon of program A on the desktop of the electronic device, so that the electronic device can display the password input interface, so that the user can enter the password in the input box of the password input interface, so that the electronic device can start the program A when the password is the unlock password, and display user data or files of the program A in the interface A. However, since other users may see the password entered by the user when the user enters the password in the input box of the password input interface, it may lead to leakage of user data, so that the user data in the electronic device may be less secure.

However, in this embodiment of the application, the user may first input a program icon (or some program icons) on the desktop of the electronic device, so that the electronic device can adjust a display parameter of the program icon (or some program icons), and then the user can tap the adjusted program icon (or a program icon among the program icons), so that when a display parameter of the adjusted program icon ( or some adjusted program icons) meets the first preset condition, the electronic device can display user data or files in the interface A of the program indicated by the program icon. It can be understood that when the user triggers the electronic device to adjust the display parameter of a program icon (or some program icons), other users may not imagine that the user is unlocking the electronic device, and therefore other users will not trigger the electronic device to display user data or files in the interface A of the program indicated by the certain program icon, which can avoid leakage of the user data, thus improving the security of the user data in the electronic device.

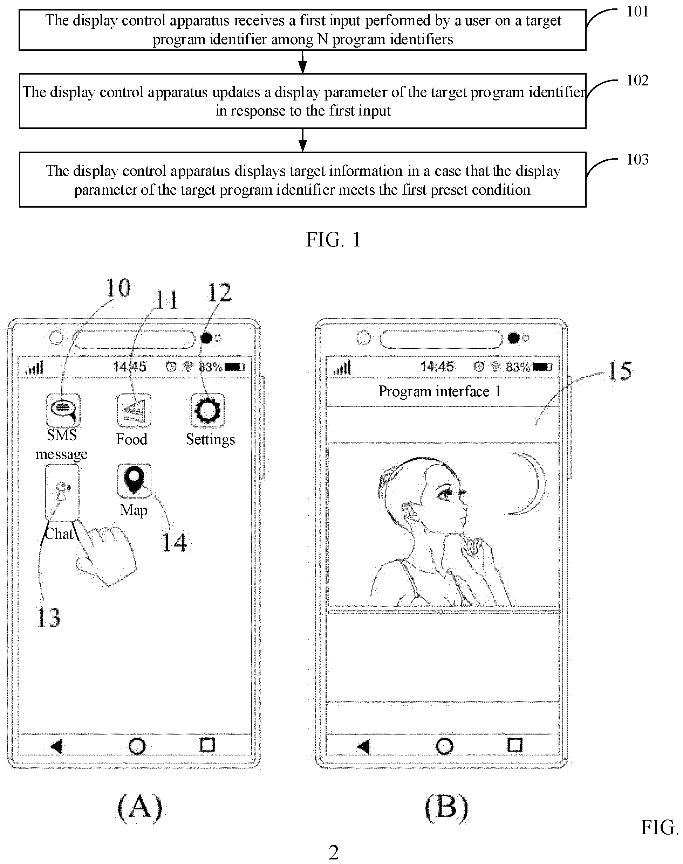

FIG. 1 shows a flowchart of a display control method provided by an embodiment of the present application. As shown in FIG. 1, the display control method provided by the embodiment of the present application may include the following steps 101 to 103.

Step 101. The display control apparatus receives a first input performed by a user on a target program identifier among N program identifiers.

In the embodiment of the present application, N is a positive integer.

Optionally, in this embodiment of the application, when the display control apparatus enables the "Huarong Grid Unlock" function, the display control apparatus may display the desktop according to a press input performed by the user on the display control apparatus (for example, a physical button (for example, the HOME button) of the display control apparatus), where the desktop includes N program identifiers, so that the user can perform a first input on the target program identifier.

Optionally, in this embodiment of the present application, the target program identifier may include one program identifier or multiple program identifiers.

It should be noted that the "target program identifier" refers to a program identifier on which the user performs the first input, and is not limited to a specific program identifier among the N program identifiers. The identifiers in the embodiments of this application are used to indicate text, symbols, images, etc. of information, and controls or other containers may be used as carriers for displaying information, and the identifiers include but are not limited to text identifiers, symbol identifiers, and image identifiers.

Optionally, in the embodiment of the present application, the N program identifiers may be: program identifiers of all applications in the display control apparatus, or program identifiers of some of applications; each program identifier in the N program identifiers may include any one of the following: application icon, application name, application link, etc.

Optionally, in this embodiment of the present application, the first input may include one input or multiple inputs.

Further optionally, in the embodiment of the present application, in a case that the first input includes one input, the first input may specifically be a drag input performed by a user on the target program identifier; in a case that the first input includes multiple inputs, the first input may include a first sub-input and a second sub-input. Specifically, the first sub-input may be a drag input performed by a user on the target program identifier, and the second sub-input may specifically be a press input performed by a user on the target program identifier, such as tap input.

Step 102: The display control apparatus updates a display parameter of the target program identifier in response to the first input.

Optionally, in this embodiment of the present application, the display parameter may include at least one of the following: a display ratio, an arrangement shape, a display area, a display color, display transparency, a display contrast, and the like.

It should be noted that the "display ratio" can be understood as: the ratio between a size of the program identifier in a first direction (for example, horizontal direction) and a size of the program identifier in a second direction (for example, vertical direction). The first direction is perpendicular to the second direction.

Exemplarily, assuming that the size of the program identifier A is 20 mm in the horizontal direction and 40 mm in the vertical direction, the display ratio of the program identifier A is 20:40, that is, 1:2.

Optionally, in the embodiment of the present application, the display control apparatus may determine, according to the input track of the first input, a first display parameter corresponding to an input track, and adjust the initial display parameter of the target program identifier to the first display parameter to update the display parameter of the target program identifier.

Step 103: The display control apparatus displays target information in a case that the display parameter of the target program identifier meets the first preset condition.

Optionally, in this embodiment of the application, after the display control apparatus updates the display parameter of the target program identifier, the display control apparatus may determine whether the display parameter of the target program identifier meets the first preset condition based on the press input performed by a user on the target program identifier (for example, tap input), and when the display parameter of the target program identifier meets the first preset condition, display the target information.

Optionally, in this embodiment of the present application, the first preset condition may be: the display parameter of the target program identifier is updated to a preset display parameter.

Further optionally, in the embodiment of the present application, the preset display parameter may specifically be: a display parameter preset by a user in the display control apparatus, or a display parameter acquired by the display control apparatus from a server.

Further optionally, in the embodiment of the present application, the preset display parameter may include one preset display parameter or multiple display parameters.

Optionally, in the embodiment of the present application, the first preset condition includes at least one of the following:
the display ratio of the target program identifier is updated to a preset display ratio;
the display ratio of the target program identifier is updated to a preset display ratio, and the arrangement shape of the target program identifier is a preset shape, where the target program identifier includes at least two program identifiers; and
the display ratio of the target program identifier is updated to a preset display ratio, the arrangement shape of the target program identifier is a preset shape, and the target program identifier is located in a preset area, where the target program identifier includes at least two program identifiers.

Further optionally, in the embodiment of the present application, the first preset condition may also include at least one of the following:
the display color of the target program identifier is updated to a preset display color;
the display transparency of the target program identifier is updated to a preset display transparency; and
the display contrast of the target program identifier is updated to a preset display contrast.

Further optionally, in the embodiment of the present application, the preset display ratio may include one display ratio or multiple display ratios. If the target program identifier is one program identifier, the preset display ratio is one display ratio; if the target program identifier is multiple program identifiers, the preset display ratio is multiple display ratios.

For example, assuming that the target program identifier is program identifier 1, the preset display ratio is one display ratio, such as 1:2; and assuming that the target program identifier is program identifier 2 and program identifier 3, the preset display ratio is multiple display ratios, such as 1:1 and 2:1. It can be understood that one of the target program identifiers corresponds to one of the preset display ratios.

Further optionally, in the embodiment of the present application, the preset shape may include one shape or multiple shapes.

Exemplarily, assuming that the preset shape is a shape, such as the shape of the number "1", the arrangement shape of the target program identifier is a preset shape, which may be: the arrangement shape of all the program identifiers among the target program identifiers is the preset shape. Assuming that the preset shape is multiple shapes, such as the shape of the number "1" and a triangle shape, the arrangement shape of the target program identifier is a preset shape, which may be: the arrangement shapes of some program identifiers among the target program identifiers are the shape of the number " 1", and the arrangement shapes of some other program identifiers are a triangular shape.

Further optionally, in the embodiment of the present application, the preset area includes one area or multiple areas. If the target program identifier is one program identifier, the preset area is one area, and if the target program identifier is multiple program identifiers, the preset area includes multiple areas.

Further optionally, in the embodiment of the present application, the preset display color (or preset display transparency, or preset display contrast) includes one color (or transparency or contrast) or multiple colors (or transparency or contrast). If the target program identifier is one program identifier, the preset color (or transparency or contrast) is one color (or transparency or contrast), and if the target program identifier is multiple program identifiers, the preset color (or transparency or contrast) includes multiple colors (or transparency or contrast).

Optionally, in this embodiment of the present application, X association relationships are prestored in the display control apparatus, and each association relationship includes: an association relationship between a first program identifier and a preset display parameter. Therefore, the display control apparatus can determine whether the display parameter of the target program identifier meets the first preset condition based on the X association relationships, where X is a positive integer greater than or equal to 1.

Further optionally, in the embodiment of the present application, the X association relationships may specifically be: association relationships preset by the user in the display control apparatus, or association relationships downloaded from the server by the display control apparatus.

Further optionally, in this embodiment of the present application, for each of the X first program identifiers, one first program identifier may be associated with one preset display parameter; or one first program identifier may be associated with multiple preset display parameters.

Specifically, in the embodiment of the present application, in a case that one first program identifier is associated with one preset display parameter, the display control apparatus may first determine a corresponding first program identifier from the X first program identifiers according to the target program identifier, determine an association relationship corresponding to the first program identifier, determine a preset display parameter in the association relationship, and then according to whether the updated display parameter of the target program identifier matches a preset display parameter, determine whether the display parameter of the target program identifier meets the first preset condition.

Specifically, in the embodiment of the present application, in a case that one first program identifier is associated with multiple preset display parameters, the display control apparatus may first determine a corresponding first program identifier from the X first program identifiers according to the target program identifier, determine multiple association relationships corresponding to the first program identifier, determine multiple preset display parameters in the multiple association relationships, and then according to whether the updated display parameter of the target program identifier matches a preset display parameter among the multiple preset display parameters, determine whether the display parameter of the target program identifier meets the first preset condition.

In the embodiment of the present application, the target information includes: a target program interface or a target program file of the target program indicated by the target program identifier.

Optionally, in the embodiment of the present application, the target program interface may specifically be: a main interface of the target program, or an interface of the target program associated with the display parameter of the target program identifier.

Further optionally, in the embodiment of the present application, when the preset display parameter includes one display parameter, the target program interface may specifically be: the main interface of the target program; when the preset display parameter includes multiple display parameters, the target program interface may specifically be: an interface of the target program associated with the display parameter of the target program identifier.

It can be understood that, when the preset display parameter includes multiple display parameters, and the display parameter of the target program identifier is different display parameters, the display control apparatus displays different program interfaces.

For example, the display control apparatus is a mobile phone for illustration. As shown in (A) in FIG. 2, the mobile phone displays N program identifiers, such as program identifier 10, program identifier 11, program identifier 12, program identifier 13, and program identifier 14. In this case, the user can perform the first input on the target program identifier (for example, program identifier 13), so that the mobile phone can update the display ratio of the program identifier 13 to 1:2. As shown in (B) in FIG. 2, when the display ratio of the program identifier 13 is updated to a display ratio among preset display ratios (for example, 1:2), the mobile phone can display a program interface (for example, interface 15).

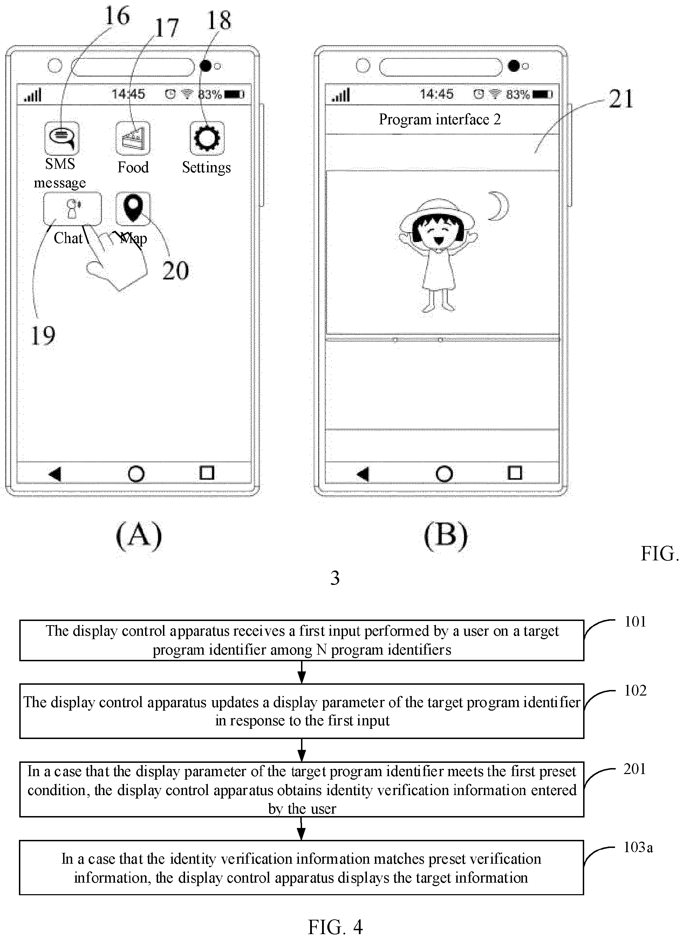

An example is used for description. As shown in (A) in FIG. 3, the mobile phone displays N program identifiers, such as program identifier 16, program identifier 17, program identifier 18, program identifier 19, and program identifier 20. In this case, the user can perform the first input on the target program identifier (for example, program identifier 19), so that the mobile phone can update the display ratio of the program identifier 19 to 2:1. Based on (B) in FIG. 2, as shown in (B) in FIG. 3, when the display ratio of the program identifier 19 is updated to another display ratio among preset display ratios (for example, 2:1), the mobile phone can display another program interface (for example, interface 21).

Optionally, in the embodiment of the present application, the target program file includes at least one of the following: picture file, text file, music file, and so on. The target program file may specifically be: all program files in the target program, or program files of the target program associated with the display parameter of the target program identifier.

Further optionally, in this embodiment of the present application, in a case that the preset display parameter includes one display parameter, the target program file may specifically be: all program files in the target program; in a case that the preset display parameter includes multiple display parameters, the target program file may specifically be: a program file of the target program associated with the display parameter of the target program identifier.

It can be understood that, when the preset display parameter includes multiple display parameters, and the display parameter of the target program identifier is different display parameters, the display control apparatus displays different program files.

Optionally, in this embodiment of the present application, the display control apparatus may start a target program, and switch the desktop to an interface of the target program to display target information.

Optionally, in this embodiment of the present application, referring to FIG. 1, as shown in FIG. 4, before "displaying target information" in step 103, the display control method provided in this embodiment of the present application may further include the following step 201, and the step 103 can be specifically implemented through the following step 103a.

Step 201: In a case that the display parameter of the target program identifier meets the first preset condition, the display control apparatus obtains identity verification information input by a user.

Further optionally, in this embodiment of the present application, when the display parameter of the target program identifier meets the first preset condition, the display control apparatus may display prompt information, where the prompt information is used to prompt the user to input identity verification information, so that the user can input identity verification information, and the display control means can obtain the identity verification information.

Further optionally, in the embodiment of the present application, the identity verification information may include any one of the following: password information, fingerprint information, facial feature information, and the like.

Specifically, in the embodiment of the present application, when the identity verification information is password information, the input of the identity verification information may specifically be: the user enters password information in the display control apparatus; when the identity verification information is fingerprint information, input of the identity verification information can specifically be: fingerprint input; when the identity verification information is facial feature information, the input of identity verification information can specifically be: input of face feature information.

It should be noted that the above "fingerprint input" can be understood as: the user places a finger on the fingerprint collection area of the display control apparatus, so that the display control apparatus can collect fingerprint information input. The above-mentioned "input of facial feature information" can be understood as an input through which the user adjusts the collection area of the facial feature information of the display control apparatus, so that the user's face is within the collection area of the facial feature information.

Step 103a: In a case that the identity verification information matches preset verification information, the display control apparatus displays the target information.

In this embodiment of the present application, different display parameters are associated with different preset verification information.

Further optionally, in the embodiment of the present application, the preset verification information may include one piece of verification information or multiple pieces of verification information. It can be understood that each preset verification information is associated with a display parameter.

It should be noted that, for the description of displaying target information by the display control apparatus, reference may be made to the specific description in step 103 above, and details will not be repeated here in this embodiment of the present application.

It can be seen from this that, when the display parameter of the target program identifier meets the first preset condition, the display control apparatus can then determine whether the identity verification information input by the user matches the preset verification information associated with the display parameter, and display the target information only when the identity verification information matches the preset verification information, that is, the display control apparatus needs to perform determining again before displaying the target information. Therefore, the security of user data in the display control apparatus can be improved.

Optionally, in the embodiment of the present application, the above step 103 may also be replaced by the following step 104.

Step 104: The display control apparatus may prompt the user in a first prompt manner in a case that the display parameter of the target program identifier does not meet the first preset condition.

Specifically, in the embodiment of the present application, the first prompting manner may include at least one of the following: a vibration prompt manner, a ringing prompt manner, a manner of displaying a prompt message, an animation prompt manner, and the like.

In the display control method provided by the embodiment of the present application, the display control apparatus may update a display parameter of the target program identifier according to a first input performed by a user on a target program identifier among N program identifier; and when the display parameter of the target program identifier meets a first preset condition, display a target program interface or a target program file of a target program indicated by the target program identifier. Since the display control apparatus can update the display parameter of the target program identifier according to the first input performed by the user on the target program identifier, and determine whether the display parameters meet the first preset condition, only after determining that the display parameter of the target program identifier meets the first preset condition, the display control apparatus displays the target program interface or target program file of the target program, that is, the user can trigger the display control apparatus to display the target program interface or target program file of the target program without inputting the unlock password. Therefore, it can prevent other users from seeing the unlock password input by the user, thus improving the security of user data in the display control apparatus.

The following will take a variety of different display parameters as examples to illustrate how the display control apparatus displays target information.

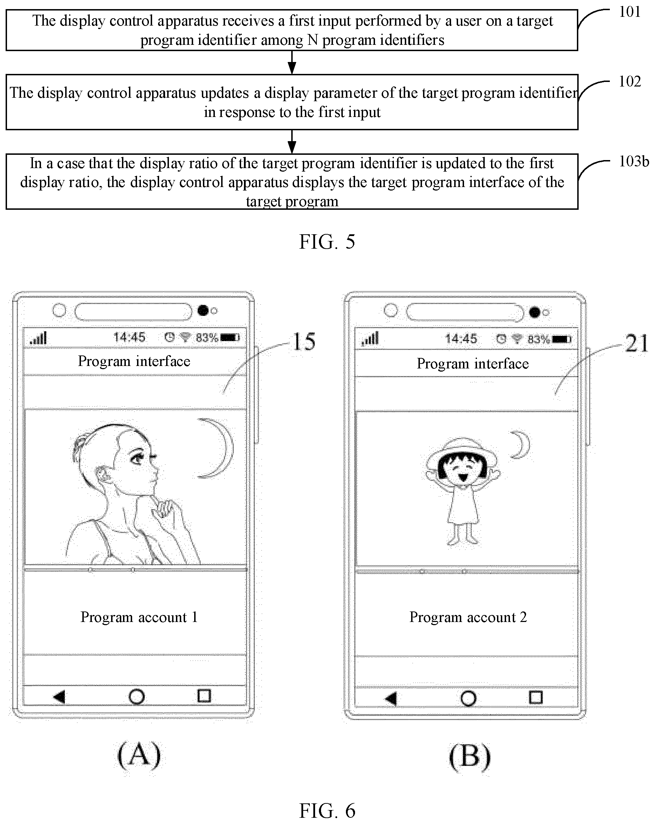

Optionally, in a possible implementation manner of the embodiment of the present application, the display parameter includes: a display ratio, and the target information includes: a target program interface of a target program indicated by the target program identifier. Specifically, with reference to FIG. 1, as shown in FIG. 5, the foregoing step 103 may be specifically implemented by performing the following step 103b.

Step 103b: In a case that the display ratio of the target program identifier is updated to the first display ratio, the display control apparatus displays the target program interface of the target program.

It can be understood that the preset display parameter includes multiple display parameters, and the multiple display parameters include the first display ratio.

In the embodiment of the present application, the first display ratio is associated with the target program interface of the target program, and different display ratios are associated with program interfaces of different program accounts of the target program.

Further optionally, in the embodiment of the present application, each of the X association relationships is: an association relationship between one first program identifier, one display ratio, and one program interface.

Further optionally, in this embodiment of the present application, the display control apparatus may first determine a corresponding first program identifier from the X first program identifiers according to the target program identifier, determine multiple association relationships corresponding to the first program identifier, and determine multiple display ratios in the multiple association relationships, and then the display control apparatus can determine a corresponding display ratio (that is, the first display ratio) from the multiple display ratios according to the updated display size of the target program identifier, and determine a program interface (that is, the target program interface) associated with the first display ratio, so that the display control apparatus can start the target program and display the target program interface.

Further optionally, in the embodiment of the present application, the target program may specifically include multiple programs. The multiple programs may include: a main program and at least one cloned application of the main program. The program accounts of all the multiple programs are different.

It should be noted that, for the description of the cloned application, reference may be made to specific descriptions in related technologies, and the embodiments of the present application will not repeat them here.

Specifically, in the embodiment of the present application, when the display ratio of the target program identifier is updated to the first display ratio, the display control apparatus may start the main program and display the target program interface.

Specifically, in the embodiment of the present application, when the display ratio of the target program identifier is updated to a fifth display ratio, the display control apparatus may start a first cloned application and display the first program interface. The fifth display ratio is one of the X display ratios in the X association relationships, and the fifth display ratio is associated with the first program interface of the first avatar program.

For example, in combination with (A) in FIG. 2, as shown in (A) in FIG. 6, when the display ratio of the program identifier 13 is updated to the first display ratio (for example, 1:2), the mobile phone can display the target program interface (for example, interface 22), where the interface 22 is the program interface of the main program. In combination with (A) in FIG. 3, as shown in (B) in FIG. 6, when the display ratio of the program identifier 19 is updated to the fifth display ratio (for example, 2:1), the mobile phone can display the first program interface (for example, interface 23), where the interface 23 is the program interface of the first cloned application of the main program, and the program account of the interface 23 is different from the program account of the interface 22.

It can be seen that, when the display ratio of the target program identifier is updated to different display ratios, the display control apparatus can display the program interfaces of different program accounts associated with the different display ratios, so that other users can trigger the display control apparatus to display a program interface of a program account, and cannot trigger the display control apparatus to display program interfaces of other program accounts. Therefore, the leakage of user data in the display control apparatus can be avoided, and the security of the user data in the display control apparatus can be improved.

It can be understood that the display control apparatus may not display the program identifier of each cloned application on the desktop, and the user does not need to use an unlock password to open the program, thereby reducing the traces of user data encryption, that is, other users do not know that the user has encrypted the cloned application, and do not know that the cloned application includes user data, so as to prevent other users from triggering the display control apparatus to display the program interface of the cloned application. Moreover, the user can perform the unlocking operation by adjusting the display ratio of the program identifier, which is convenient to operate, and by adjusting the display ratio of the program identifier, there is no need to trigger the display control apparatus to jump the interface, and there is no need to operate other controls, that is, there is no need to add settings of other controls, so that the time consumed by the unlocking operation can be reduced and the display space of the interface can be saved.

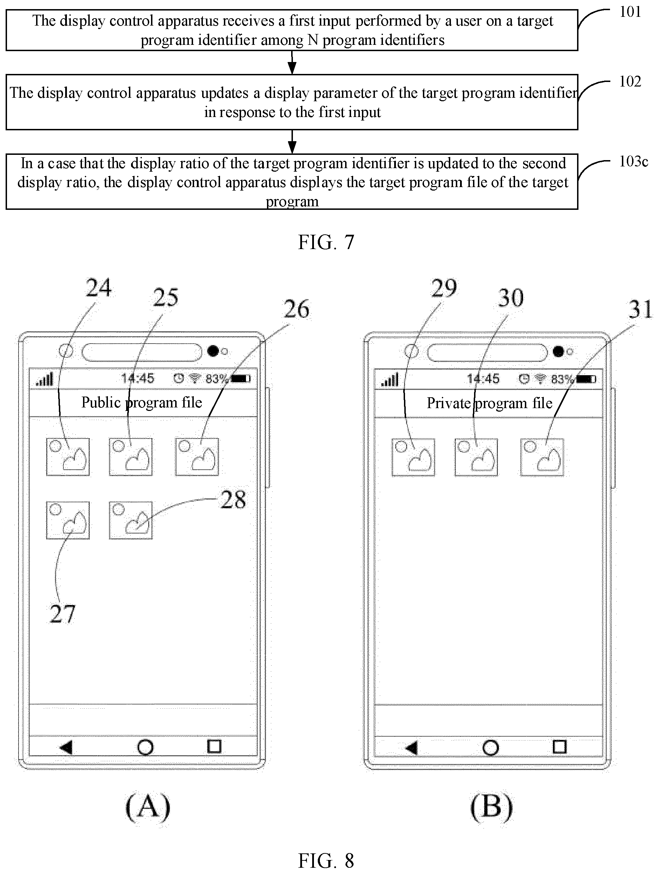

Optionally, in another possible implementation manner of the embodiment of the present application, the display parameter includes: a display ratio, and the target information includes: a target program file of a target program indicated by the target program identifier. Specifically, referring to FIG. 1, as shown in FIG. 7, the above step 103 may be specifically implemented through the following step 103c.

Step 103c: In a case that the display ratio of the target program identifier is updated to the second display ratio, the display control apparatus displays the target program file of the target program.

In the embodiment of the present application, the second display ratio is associated with the target program file of the target program, and different display ratios are associated with program files with different file usage permissions of the target program.

Further optionally, in the embodiment of the present application, each of the X association relationships is: an association relationship between one first program identifier, one display ratio, and one program file.

Further optionally, in this embodiment of the present application, the display control apparatus may first determine a corresponding first program identifier from the X first program identifiers according to the target program identifier, determine multiple association relationships corresponding to the first program identifier, and determine multiple display ratios in the multiple association relationships, and then the display control apparatus can determine a corresponding display ratio (that is, the first display ratio) from the multiple display ratios according to the updated display size of the target program identifier, and determine a program file (that is, the target program file) associated with the first display ratio, so that the display control apparatus can start the target program and display the target program file.

Further optionally, in the embodiment of the present application, the target program file may include one program file or multiple program files. The file usage permissions of the multiple program files are the same.

Specifically, in the embodiment of the present application, when the display ratio of the target program identifier is updated to the second display ratio, the display control apparatus may start the target program and display the target program file.

Specifically, in the embodiment of the present application, when the display ratio of the target program identifier is updated to the sixth display ratio, the display control apparatus may start the target program and display the first program file. The sixth display ratio is one of the X display ratios in the X association relationships, the sixth display ratio is associated with the first program file, and the file usage permission of the first program file is different from that of the target program file.

For example, in combination with (A) in FIG. 2, as shown in (A) in FIG. 8, when the display ratio of the target program identifier (for example, program identifier 13) is updated to the second display ratio (for example, 1:2), the mobile phone can display the target program files (for example, program files 24, program files 25, program files 26, program files 27 and program files 28), where file usage permissions of the program files 24, program files 25, program files 26, program files 27, and program files 28 are public. As shown in (B) in FIG. 8, when the display ratio of the program identifier 13 is updated to the sixth display ratio (for example, 2:1), the mobile phone can display the first program file (for example, the program file 29, the program file 30, and the program file 31), where file usage permissions of the program file 29, the program file 30, and the program file 31 are private.

It can be seen that, when the display ratio of the target program identifier is updated to different display ratios, the display control apparatus can display the program files of different file usage permissions associated with the different display ratios, so that other users can trigger the display control apparatus to display a program file of a file usage permission, and cannot trigger the display control apparatus to display program files of other file usage permissions. Therefore, the leakage of user data in the display control apparatus can be avoided, and the security of the user data in the display control apparatus can be improved.

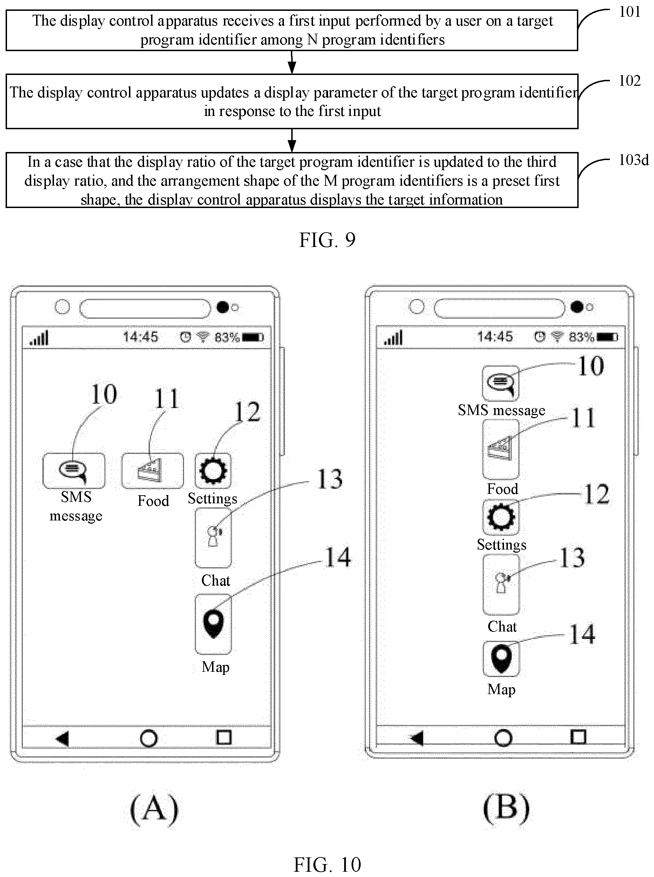

Optionally, in yet another possible implementation of the embodiment of the present application, the display parameter includes: a display ratio and an arrangement shape; N is greater than 1, and the target program identifier includes M program identifiers, M is an integer greater than 1, and M<N. Specifically, referring to FIG. 1, as shown in FIG. 9, the above step 103 may be specifically implemented through the following step 103 d.

Step 103d: In a case that the display ratio of the target program identifier is updated to the third display ratio, and the arrangement shape of the M program identifiers is a preset first shape, the display control apparatus displays the target information.

In the embodiment of the present application, the preset first shape is associated with target information.

Further optionally, in the embodiment of the present application, the third display ratio may include M display ratios, each of the M display ratios corresponds to one of the M program identifiers, and the M display ratios may be all the same, some of them may be the same, or all of them may be different.

Further optionally, in the embodiment of the present application, the preset first shape may include any one of the following: a number shape, a character shape, a rectangle shape, a triangle shape, a circle shape, an irregular shape, and the like.

It should be noted that the above "number shape" can be understood as: M program identifiers are arranged to form a number shape, for example, M program identifiers are arranged to form the shape of the number "7". The above "character shape" can be understood as: M program identifiers are arranged to form the shape of characters, for example, M program identifiers are arranged to form the shape of the word " "□". The above "rectangular shape" can be understood as: M program identifiers are arranged to form a rectangular shape.

In the embodiment of the present application, in a case that the target information includes a target program interface, different arrangement shapes are associated with program interfaces of different program accounts of the target program.

Exemplarily, assuming that the target program identifiers are program identifier 1, program identifier 2, program identifier 3, program identifier 4, and program identifier 5, when the program identifier 1, program identifier 2, program identifier 3, program identifier 4, and program identifier 5 are arranged in the shape of the number "8", the display control apparatus can display the program interface of the program account 1. When the program identifier 1, the program identifier 2, the program identifier 3, the program identifier 4 and the program identifier 5 are arranged as the shape of the character "□", the display control apparatus can display the program interface of program account 2. When the program identifier 1, the program identifier 2 and the program identifier 3 are arranged in a triangular shape, and the program identifier 4 and the program identifier 5 are arranged in the shape of the number "1", the display control apparatus may display the program interface of the program account 3.

Further optionally, in the embodiment of the present application, each of the X association relationships is: an association relationship between one first program identifier, one display ratio, one shape, and one program interface.

It should be noted that, for the description of the program interface displayed by the display control apparatus, reference may be made to the specific description in the above step 103b, which will not be repeated here in this embodiment of the present application.

Further optionally, in this embodiment of the present application, after the display control apparatus updates the display parameter of the target program identifier (that is, the M program identifiers), the display control apparatus may display the target information according to the press input performed by a user on a program identifier among the M program identifiers when the display ratio of the target program identifier is updated to the third display ratio and the arrangement shape of the M program identifiers is the preset first shape. It can be understood that the target information may specifically be: a target program interface or a target program file of the target program indicated by the program identifier.

It should be noted that the "target" in the above "target program", "target program interface" and "target program file" is only to distinguish different programs, different program interfaces and different program files, and does not specifically refer to a specific program, a specific program interface, and a specific program file.

Further optionally, in the embodiment of the present application, the target program interface or the target program file may be set by the user, or may be a main interface of the target program or a program file whose file usage permission is public.

For example, in combination with (A) in FIG. 2, as shown in (A) in FIG. 10, when the display ratio of the target program identifier (for example, program identifier 10, program identifier 11, program identifier 12, program identifier 13, and program identifier 14) is updated to the third display ratio (that is, M display ratios, that is, 5 display ratios), for example, the display ratio of program identifier 10 is updated to 2:1, the display ratio of program identifier 11 is updated to 2:1, the display ratio of program identifier 12 is updated to 1:1, the display ratio of program identifier 13 is updated to 1:2, and the display ratio of program identifier 14 is updated to 1:2, and the arrangement shape of program identifier 10 to program identifier 14 is the preset first shape (for example, the shape of the number "7"), the mobile phone can display an interface 22, as shown in (A) in FIG. 6. As shown in (B) in FIG. 10, when the display ratio of the target program identifier is updated to the third display ratio (that is, M display ratios, that is, 5 display ratios), for example, the display ratio of program identifier 10 is updated to 1:1, the display ratio of program identifier 11 is updated to 1:2, and the display ratio of program identifier 12 is updated to 1:1, the display ratio of program identifier 13 is updated to 1:2, and the display ratio of program identifier 14 is updated to 1:1, and the arrangement shape of the program identifier 10 to program identifier 14 is the preset third shape (for example, the shape of a number " 1"), the mobile phone may display an interface 23, as shown in (B) in FIG. 6.

In the embodiment of the present application, in a case that the target information includes a target program file, different arrangement shapes are associated with program files with different file usage permissions of the target program.

It should be noted that, for the description of displaying the program file by the display control apparatus, reference may be made to the specific description in the above step 103c, which will not be repeated here in this embodiment of the present application.

It can be seen that, when the display ratio of the M program identifiers is updated to the preset display ratio, and the arrangement shapes of the M program identifiers are preset different shapes, the display control apparatus can display different information associated with the preset different shapes (that is, different program interfaces or different program files). Therefore, other users can trigger the display control apparatus to display the program interface of a program account or the program file of a file usage permission, but cannot trigger the display control apparatus to display program files of other file usage permissions. Therefore, the leakage of user data in the display control apparatus can be avoided, and the security of user data in the display control apparatus can be improved.

It can be understood that since the display control apparatus needs to determine whether the display ratio and the arrangement shape of the target program identifier both meet the first preset condition, and display the target information only when the display ratio and the arrangement shape of the target program identifier both meet the first preset condition, the difficulty for other users (that is, strangers) to crack the password can be increased, thereby further improving the security of user data in the display control apparatus.

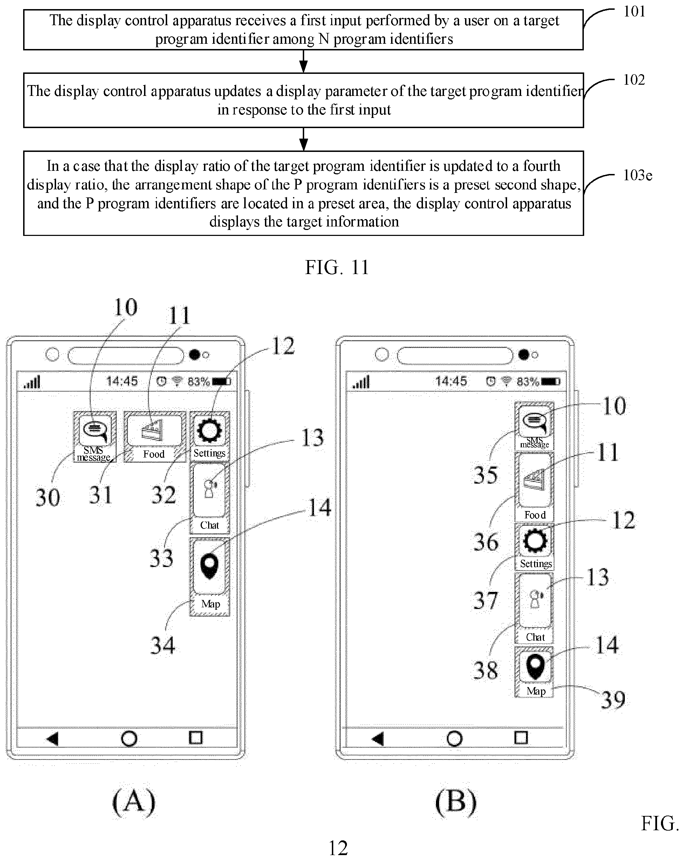

Optionally, in yet another possible implementation of the embodiment of the present application, the display parameter includes: a display ratio, an arrangement shape, and a display area; N is greater than 1, and the target program identifier includes P program identifiers, P is an integer greater than 1, and P<N. Specifically, referring to FIG. 1, as shown in FIG. 11, the above step 103 may be specifically implemented through the following step 103e.

Step 103e: In a case that the display ratio of the target program identifier is updated to a fourth display ratio, the arrangement shape of the P program identifiers is a preset second shape, and the P program identifiers are located in a preset area, the display control apparatus displays the target information.

In the embodiment of the present application, the target information is associated with both the preset second shape and the preset area.

Further optionally, in the embodiment of the present application, the fourth display ratio may include P display ratios, each of the P display ratios corresponds to one of the P program identifiers, and the P display ratios may be all the same, some of them may be the same, or all of them may be different.

Further optionally, in the embodiment of the present application, the preset area may include P areas, and each area in the P areas corresponds to a program identifier among the P program identifiers.

Further optionally, in the embodiment of the present application, the preset second shape may include any one of the following: a number shape, a rectangle shape, a triangle shape, a circle shape, an irregular shape, and the like.

In the embodiment of the present application, in a case that the target information includes a target program interface, different arrangement shapes and display areas are associated with program interfaces of different program accounts of the target program.

It should be noted that, for the description of the program interface displayed by the display control apparatus, reference may be made to the specific description in the above step 103b, which will not be repeated here in this embodiment of the present application.

Further optionally, in this embodiment of the present application, after the display control apparatus updates the display parameter of the target program identifier (that is, the P program identifiers), the display control apparatus may display the target information according to the press input performed by a user on a program identifier among the P program identifiers when the display ratio of the target program identifier is updated to the fourth display ratio, the arrangement shape of the P program identifiers is the preset second shape, and the P program identifiers are located in the preset area. It can be understood that the target information may specifically be: a target program interface or a target program file of the target program indicated by the program identifier.

For example, in conjunction with (A) in FIG. 2, as shown in (A) in FIG. 12, when the display ratio of the target program identifier (for example, program identifier 10, program identifier 11, program identifier 12, program identifier 13, and program identifier 14) is updated to the fourth display ratio (that is, P display ratios, that is, 5 display ratios), for example, the display ratio of program identifier 10 is updated to 1:1, the display ratio of program identifier 11 is updated to 2:1, the display ratio of 12 is updated to 1:1, the display ratio of program identifier 13 is updated to 1:2, and the display ratio of program identifier 14 is updated to 1:2, the arrangement shape of program identifier 10 to program identifier 14 is the preset second shape (for example, the shape of the number "7"), and the program identifier 10 to program identifier 14 are located in the preset area (that is, P first areas, such as area 32, area 33, area 34, area 35 and area 36), that is, the program identifier 10 is located in area 32 (shown as a shaded area in the figure), the program identifier 11 is located in area 33 (shown as a shaded area in the figure), the program identifier 12 is located in area 34 (shown as a shaded area in the figure), the program identifier 13 is located in area 35 (shown as a shaded area in the figure), and the program identifier 14 is located in area 36 (shown as a shaded area in the figure), the mobile phone can display an interface 22, that is, as shown in (A) in FIG. 6. As shown in (B) in FIG. 12, when the display ratio of the target program identifier is updated to the fourth display ratio, the arrangement shape of the program identifier 10 to program identifier 14 is a preset fourth shape (for example, the shape of the number "1"), and the program identifier 10 to program identifier 14 are located in the preset area (that is, P second areas, such as area 37, area 38, area 39, area 40 and area 41), for example, program identifier 10 is located in area 37, program identifier 11 is located in area 38, program identifier 12 is located in area 39, program identifier 13 is located in area 40, and program identifier 14 is located in area 41, the mobile phone can display interface 23, that is, shown in (B) in FIG. 6. It can be understood that if the program identifier 11 is not located in the area 33, or the program identifier 12 is not located in the area 34, or the program identifier 13 is not located in the area 35, or the program identifier 14 is not located in the area 36, the mobile phone will not display the interface 22 or the interface 23, but uses the first prompt method to prompt the user.

In the embodiment of the present application, in a case that the target information includes a target program file, different arrangement shapes and display areas are associated with program files with different file usage permissions of the target program.

It should be noted that, for the description of displaying the program file by the display control apparatus, reference may be made to the specific description in the above step 103c, which will not be repeated here in this embodiment of the present application.

It can be seen that, when the display ratio of the P program identifiers is updated to the preset display ratio, the arrangement shapes of the P program identifiers are preset different shapes, and the P program identifiers are located in different preset areas, the display control apparatus can display different information associated with the preset different shapes and different preset areas (that is, different program interfaces or different program files). Therefore, other users can trigger the display control apparatus to display the program interface of a program account or the program file of a file usage permission, but cannot trigger the display control apparatus to display program files of other file usage permissions. Therefore, the leakage of user data in the display control apparatus can be avoided, and the security of user data in the display control apparatus can be improved.

It can be understood that since the display control apparatus needs to determine whether the display ratio, the arrangement shape, and the display area of the target program identifier all meet the first preset condition, and display the target information only when the display ratio, the arrangement shape, and the display area of the target program identifier all meet the first preset condition, the difficulty for other users (that is, strangers) to crack the password can be increased, thereby further improving the security of user data in the display control apparatus.

It should be noted that, the display control method provided in this embodiment of this application may be performed by a display control apparatus or a control module that is in the display control apparatus and that is configured to perform the display control method. In the embodiment of the present application, taking the display control apparatus executing the display control method as an example, the display control apparatus provided in the embodiment of the present application is described.

Optionally, in another possible implementation manner of the embodiment of the present application, the display parameter includes: a display color, and the target information includes: a target program interface of a target program indicated by the target program identifier. Specifically, the above step 103 may be implemented through the following step 103f.

Step 103f: In a case that the display color of the target program identifier is updated to the first display color, the display control apparatus displays the target program interface of the target program.

In the embodiment of the present application, the first display color is associated with the target program interface of the target program, and different display colors are associated with program interfaces of different program accounts of the target program.

It should be noted that, for the description of displaying the target program interface by the display control apparatus, reference may be made to the specific description in the above-mentioned step 103b, which will not be repeated in this embodiment of the present application.

It should be noted that the display parameter may include multiple different display parameters. When the display parameter includes different display parameters, the first preset condition may also be different, so that when it is determined that the first preset condition is met, the display control apparatus may display program interfaces of different program accounts or program files of different file usage permissions according to the multiple different display parameters, which are not exhaustively described in this embodiment of the present application.

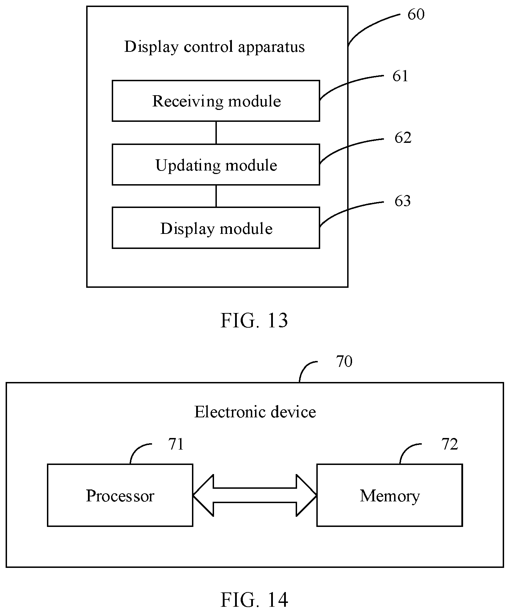

FIG. 13 shows a possible structural diagram of a display control apparatus in the embodiment of the present application. As shown in FIG. 13, the display control apparatus 60 may include: a receiving module 61, an update module 62 and a display module 63.

The receiving module 61 is configured to receive a first input performed by a user on a target program identifier among N program identifiers. The update module 62 is configured to: in response to the first input received by the receiving module 61, update a display parameter of the target program identifier. The display module 63 is configured to: in a case that the display parameter of the target program identifier updated by the update module 62 meets a first preset condition, display target information. The target information includes: a target program interface or a target program file of a target program indicated by the target program identifier; and N is a positive integer.

In a possible implementation manner, the display parameter includes: a display ratio, and the target information includes: a target program interface of a target program indicated by the target program identifier; and the display module 63 is specifically configured to: in a case that the display ratio of the target program identifier is updated to a first display ratio, display the target program interface of the target program; where the first display ratio is associated with the target program interface of the target program, and different display ratios are associated with program interfaces of different program accounts of the target program.

In a possible implementation manner, the display parameter includes: a display ratio, and the target information includes: a target program file of a target program indicated by the target program identifier. The display module 63 is specifically configured to: in a case that the display ratio of the target program identifier is updated to a second display ratio, display the target program file of the target program; where the second display ratio is associated with the target program file of the target program, and different display ratios are associated with program files with different file usage permissions of the target program.

In a possible implementation manner, the display parameter includes: a display ratio and an arrangement shape; N is greater than 1, and the target program identifier includes M program identifiers, M is an integer greater than 1, and M≤N. The display module 63 is specifically configured to display the target information in a case that the display ratio of the target program identifier is updated to a third display ratio and the arrangement shape of the M program identifiers is a preset first shape. The preset first shape is associated with target information; in a case that the target information includes the target program interface, different arrangement shapes are associated with program interfaces of different program accounts of the target program; in a case that the target information includes the target program file, different arrangement shapes are associated with program files with different file usage permissions of the target program.

In a possible implementation manner, the display parameter includes: a display ratio, an arrangement shape, and a display area; N is greater than 1, and the target program identifier includes P program identifiers, P is an integer greater than 1, and P≤N. The display module 63 is specifically configured to: in a case that the display ratio of the target program identifier is updated to a fourth display ratio, the arrangement shape of the P program identifiers is a preset second shape, and the P program identifiers are located in a preset area, display the target information. The target information is associated with both the preset second shape and the preset area; in a case that the target information includes the target program interface, different arrangement shapes and display areas are associated with program interfaces of different program accounts of the target program; in a case that the target information includes the target program file, different arrangement shapes and display areas are associated with program files with different file usage permissions of the target program.

In a possible implementation manner, the display control apparatus 60 provided in the embodiment of the present application may further include: an obtaining module. The obtaining module is configured to obtain identity verification information entered by the user. The display module 63 is specifically configured to: in a case that the identity verification information matches preset verification information, display the target information; where different display parameters are associated with different preset verification information.

In a possible implementation manner, the first preset condition includes at least one of the following: the display ratio of the target program identifier is updated to a preset display ratio; the display ratio of the target program identifier is updated to a preset display ratio, and the arrangement shape of the target program identifier is a preset shape, where the target program identifier includes at least two program identifiers; and the display ratio of the target program identifier is updated to a preset display ratio, the arrangement shape of the target program identifier is a preset shape, and the target program identifier is located in a preset area, where the target program identifier includes at least two program identifiers.

In the display control apparatus provided in the embodiment of the present application, since the display control apparatus can update the display parameter of the target program identifier according to the first input performed by the user on the target program identifier, and determine whether the display parameters meet the first preset condition, only after determining that the display parameter of the target program identifier meets the first preset condition, the display control apparatus displays the target program interface or target program file of the target program, that is, the user can trigger the display control apparatus to display the target program interface or target program file of the target program without inputting the unlock password. Therefore, it can prevent other users from seeing the unlock password input by the user, thus improving the security of user data in the display control apparatus.

The display control apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle terminal device, a wearable device, an ultra-mobile personal computer (ultra-mobile personal computer, UMPC), a netbook, or a personal digital assistant (personal digital assistant, PDA), and the non-mobile electronic device may be a server, a network attached storage (network attached storage, NAS), a personal computer (personal computer, PC), a television (television, TV), a counter, or a self-service machine. This is not specifically limited in this embodiment of this application.

The display control apparatus in this embodiment of this application may be an apparatus with an operating system. The operating system may be an Android (Android) operating system, an iOS operating system, or another possible operating system. This is not specifically limited in the embodiments of this application.

The display control apparatus provided in this embodiment of this application can implement processes implemented in the method embodiments of FIG. 1 to FIG. 12. To avoid repetition, details are not described herein again.

Optionally, as shown in FIG. 14, the embodiments of the present application further provide an electronic device 70, including a processor 71, a memory 72, and a program or instruction stored in the memory 72 and executable on the processor 71, When the program or instruction is executed by the processor 71, each process of the display control method embodiment described above can be realized, and the same technical effect can be achieved. To avoid repetition, details are not repeated herein.

It should be noted that the electronic device in this embodiment of this application includes the foregoing mobile electronic device and the foregoing non-mobile electronic device.

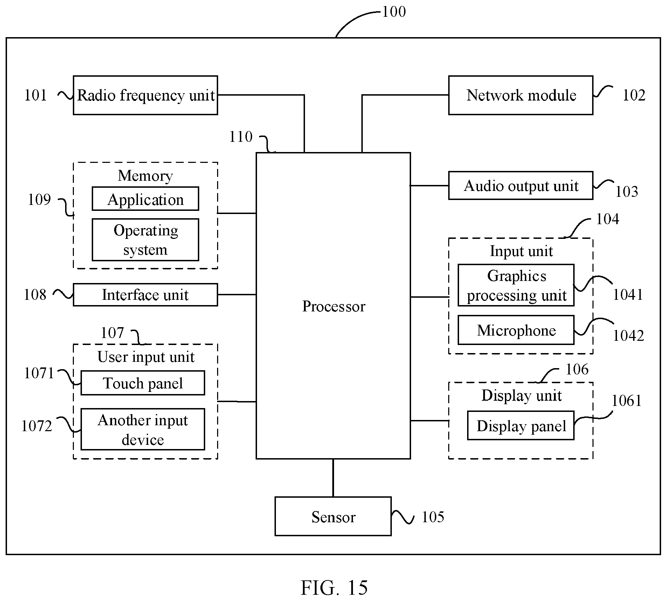

FIG. 15 is a schematic structural diagram of hardware of an electronic device according to an embodiment of this application.

An electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include a power supply (for example, a battery) that supplies power to each component. The power supply may be logically connected to the processor 110 by using a power supply management system, to implement functions such as charging and discharging management, and power consumption management by using the power supply management system. The structure of the electronic device shown in FIG. 15 does not constitute a limitation on the electronic device. The electronic device may include components more or fewer than those shown in the diagram, a combination of some components, or different component arrangements. Details are not described herein.

The user input unit 107 is configured to receive a first input performed by a user on a target program identifier among N program identifiers.

The processor 110 is configured to update a display parameter of the target program identifier in response to the first input.

The display unit 106 is configured to display target information in a case that the display parameter of the target program identifier meets a first preset condition.

The target information includes: a target program interface or a target program file of a target program indicated by the target program identifier; and N is a positive integer.

In the electronic device provided by the embodiment of the present application, since the electronic device can update the display parameter of the target program identifier according to the first input performed by the user on the target program identifier, and determine whether the display parameters meet the first preset condition, only after determining that the display parameter of the target program identifier meets the first preset condition, the electronic device displays the target program interface or target program file of the target program, that is, the user can trigger the electronic device to display the target program interface or target program file of the target program without inputting the unlock password. Therefore, it can prevent other users from seeing the unlock password input by the user, thus improving the security of user data in the electronic device.

Optionally, in the embodiment of the present application, the display parameter includes: a display ratio, and the target information includes: a target program interface of a target program indicated by the target program identifier.

The display unit 106 is specifically configured to: in a case that the display ratio of the target program identifier is updated to a first display ratio, display the target program interface of the target program;
where the first display ratio is associated with the target program interface of the target program, and different display ratios are associated with program interfaces of different program accounts of the target program.

It can be seen that, when the display ratio of the target program identifier is updated to different display ratios, the electronic device can display the program interfaces of different program accounts associated with the different display ratios, so that other users can trigger the electronic device to display a program interface of a program account, and cannot trigger the electronic device to display program interfaces of other program accounts. Therefore, the leakage of user data in the electronic device can be avoided, and the security of the user data in the electronic device can be improved.

Optionally, in the embodiment of the present application, the display parameter includes: a display ratio, and the target information includes: a target program file of a target program indicated by the target program identifier.

The display unit 106 is specifically configured to: in a case that the display ratio of the target program identifier is updated to a second display ratio, display the target program file of the target program;
where the second display ratio is associated with the target program file of the target program, and different display ratios are associated with program files with different file usage permissions of the target program.

It can be seen that, when the display ratio of the target program identifier is updated to different display ratios, the electronic device can display the program files of different file usage permissions associated with the different display ratios, so that other users can trigger the electronic device to display a program file of a file usage permission, and cannot trigger the electronic device to display program files of other file usage permissions. Therefore, the leakage of user data in the electronic device can be avoided, and the security of the user data in the electronic device can be improved.

Optionally, in the embodiment of the present application, the display parameter includes: a display ratio and an arrangement shape; N is greater than 1, and the target program identifier includes M program identifiers, M is an integer greater than 1, and M≤N.

The display unit 106 is specifically configured to display the target information in a case that the display ratio of the target program identifier is updated to a third display ratio and the arrangement shape of the M program identifiers is a preset first shape.

The preset first shape is associated with the target information.

In a case that the target information includes a target program interface, different arrangement shapes are associated with program interfaces of different program accounts of the target program; and
in a case that the target information includes a target program file, different arrangement shapes are associated with program files with different file usage permissions of the target program.

It can be seen that, when the display ratio of the M program identifiers is updated to the preset display ratio, and the arrangement shapes of the M program identifiers are preset different shapes, the electronic device can display different information associated with the preset different shapes (that is, different program interfaces or different program files). Therefore, other users can trigger the electronic device to display the program interface of a program account or the program file of a file usage permission, but cannot trigger the electronic device to display program files of other file usage permissions. Therefore, the leakage of user data in the electronic device can be avoided, and the security of user data in the electronic device can be improved.

Optionally, in the embodiment of the present application, the display parameter includes: a display ratio, an arrangement shape, and a display area; N is greater than 1, and the target program identifier includes P program identifiers, P is an integer greater than 1, and P≤N.

The display unit 106 is configured to: in a case that the display ratio of the target program identifier is updated to a fourth display ratio, the arrangement shape of the P program identifiers is a preset second shape, and the P program identifiers are located in a preset area, display the target information.

The target information is associated with both the preset second shape and the preset area.

In a case that the target information includes a target program interface, different arrangement shapes and display areas are associated with program interfaces of different program accounts of the target program; and
in a case that the target information includes a target program file, different arrangement shapes and display areas are associated with program files with different file usage permissions of the target program.

It can be seen that, when the display ratio of the P program identifiers is updated to the preset display ratio, the arrangement shapes of the P program identifiers are preset different shapes, and the P program identifiers are located in different preset areas, the electronic device can display different information associated with the preset different shapes and different preset areas (that is, different program interfaces or different program files). Therefore, other users can trigger the electronic device to display the program interface of a program account or the program file of a file usage permission, but cannot trigger the electronic device to display program files of other file usage permissions. Therefore, the leakage of user data in the electronic device can be avoided, and the security of user data in the electronic device can be improved.

Optionally, in this embodiment of the present application, the processor 110 is further configured to obtain identity verification information input by a user.

The display unit 106 is specifically configured to: in a case that the identity verification information matches preset verification information, display the target information.

Different display parameters are associated with different preset verification information.

It can be seen from this that, when the display parameter of the target program identifier meets the first preset condition, the electronic device can then determine whether the identity verification information input by the user matches the preset verification information associated with the display parameter, and display the target information only when the identity verification information matches the preset verification information, that is, the electronic device needs to perform determining again before displaying the target information. Therefore, the security of user data in the electronic device can be improved.

It should be understood that, in this embodiment of this application, the input unit 104 may include a graphics processing unit (graphics processing unit, GPU) 1041 and a microphone 1042, and the graphics processing unit 1041 processes image data of a still picture or a video obtained by an image capture apparatus (for example, a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (for example, a volume control button or a power on/off button), a trackball, a mouse, and a joystick. Details are not described herein. The memory 109 may be configured to store a software program and various data, including but not limited to an application and an operating system. An application processor and a modem processor may be integrated into the processor 110, the application processor mainly processes an operating system, a user interface, an application, and the like, and the modem processor mainly processes wireless communication. It can be understood that, alternatively, the modem processor may not be integrated into the processor 110.

An embodiment of this application further provides a readable storage medium. A program or an instruction is stored in the readable storage medium. When the program or the instruction is executed by a processor, processes of the embodiment of the display control method can be implemented, and a same technical effect can be achieved. To avoid repetition, details are not described herein.

The processor is a processor in the electronic device in the foregoing embodiment. The readable storage medium includes a computer-readable storage medium, such as a computer read-only memory (read-only memory, ROM), a random access memory (random access memory, RAM), a magnetic disk, or an optical disc.

An embodiment of this application further provides a chip. The chip includes a processor and a communication interface, the communication interface is coupled to the processor, and the processor is configured to run a program or an instruction to implement processes of the embodiment of the display control method, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the implementations of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. A display control method, the method comprising:
receiving a first input performed by a user on a target program identifier among N program identifiers;
updating a display parameter of the target program identifier in response to the first input; and
displaying target information in a case that the display parameter of the target program identifier meets the first preset condition; wherein
the target information comprises: a target program interface or a target program file of a target program indicated by the target program identifier; and N is a positive integer.

2. The method according to claim 1, wherein the display parameter comprises: a display ratio, and the target information comprises: the target program interface of the target program indicated by the target program identifier; and
the displaying target information in a case that the display parameter of the target program identifier meets the first preset condition comprises:
in a case that a display ratio of the target program identifier is updated to a first display ratio, displaying the target program interface of the target program; wherein
the first display ratio is associated with the target program interface of the target program, and different display ratios are associated with program interfaces of different program accounts of the target program.

3. The method according to claim 1, wherein the display parameter comprises: a display ratio, and the target information comprises: the target program file of the target program indicated by the target program identifier; and
the displaying target information in a case that the display parameter of the target program identifier meets the first preset condition comprises:
in a case that a display ratio of the target program identifier is updated to a second display ratio, displaying the target program file of the target program; wherein
the second display ratio is associated with the target program file of the target program, and different display ratios are associated with program files with different file usage permissions of the target program.

4. The method according to claim 1, wherein the display parameter comprises: a display ratio and an arrangement shape; N is greater than 1, and the target program identifier comprises M program identifiers, M is an integer greater than 1, and M≤N; and
the displaying target information in a case that the display parameter of the target program identifier meets the first preset condition comprises:
displaying the target information in a case that a display ratio of the target program identifier is updated to a third display ratio and an arrangement shape of the M program identifiers is a preset first shape; wherein
the preset first shape is associated with the target information;
in a case that the target information comprises the target program interface, different arrangement shapes are associated with program interfaces of different program accounts of the target program; and
in a case that the target information comprises the target program file, the different arrangement shapes are associated with program files with different file usage permissions of the target program.

5. The method according to claim 1, wherein the display parameter comprises: a display ratio, an arrangement shape and a display area; N is greater than 1, and the target program identifier comprises P program identifiers, P is an integer greater than 1, and P≤N; and
the displaying target information in a case that the display parameter of the target program identifier meets the first preset condition comprises:
in a case that a display ratio of the target program identifier is updated to a fourth display ratio, an arrangement shape of the P program identifiers is a preset second shape, and the P program identifiers are located in a preset area, displaying the target information; wherein
the target information is associated with both the preset second shape and the preset area;
in a case that the target information comprises the target program interface, different arrangement shapes and display areas are associated with program interfaces of different program accounts of the target program; and
in a case that the target information comprises the target program file, the different arrangement shapes and display areas are associated with program files with different file usage permissions of the target program.

6. The method according to claim 1, before the displaying target information, further comprising:
obtaining identity verification information entered by the user; and
the displaying target information comprises:
in a case that the identity verification information matches preset verification information, displaying the target information; wherein
different display parameters are associated with different preset verification information.

7. The method according to claim 1, wherein the first preset condition comprises at least one of the following:
a display ratio of the target program identifier is updated to a preset display ratio;
the display ratio of the target program identifier is updated to the preset display ratio, and an arrangement shape of the target program identifier is a preset shape, wherein the target program identifier comprises at least two program identifiers; and
the display ratio of the target program identifier is updated to the preset display ratio, the arrangement shape of the target program identifier is the preset shape, and the target program identifier is located in a preset area, wherein the target program identifier comprises at least two program identifiers.

8. A display control apparatus, comprising: a receiving module, an update module, and a display module;
the receiving module is configured to receive a first input performed by a user on a target program identifier among N program identifiers;
the update module is configured to: in response to the first input received by the receiving module, update a display parameter of the target program identifier; and
the display module is configured to: in a case that the display parameter of the target program identifier updated by the update module meets a first preset condition, display target information; wherein
the target information comprises: a target program interface or a target program file of a target program indicated by the target program identifier; and N is a positive integer.

9. The display control apparatus according to claim 8, wherein the display parameter comprises: a display ratio, and the target information comprises: the target program interface of the target program indicated by the target program identifier; and
the display module is specifically configured to: in a case that a display ratio of the target program identifier is updated to a first display ratio, display the target program interface of the target program; wherein
the first display ratio is associated with the target program interface of the target program, and different display ratios are associated with program interfaces of different program accounts of the target program.

10. The display control apparatus according to claim 8, wherein the display parameter comprises: a display ratio, and the target information comprises: the target program file of the target program indicated by the target program identifier; and
the display module is specifically configured to: in a case that a display ratio of the target program identifier is updated to a second display ratio, display the target program file of the target program; wherein
the second display ratio is associated with the target program file of the target program, and different display ratios are associated with program files with different file usage permissions of the target program.

11. The display control apparatus according to claim 8, wherein the display parameter comprises: a display ratio and an arrangement shape; N is greater than 1, and the target program identifier comprises M program identifiers, M is an integer greater than 1, and M≤N; and
the display module is specifically configured to display the target information in a case that a display ratio of the target program identifier is updated to a third display ratio and an arrangement shape of the M program identifiers is a preset first shape; wherein
the preset first shape is associated with the target information;
in a case that the target information comprises the target program interface, different arrangement shapes are associated with program interfaces of different program accounts of the target program; and
in a case that the target information comprises the target program file, the different arrangement shapes are associated with program files with different file usage permissions of the target program.

12. The display control apparatus according to claim 8, wherein the display parameter comprises: a display ratio, an arrangement shape and a display area; N is greater than 1, and the target program identifier comprises P program identifiers, P is an integer greater than 1, and P≤N; and
the display module is specifically configured to: in a case that a display ratio of the target program identifier is updated to a fourth display ratio, an arrangement shape of the P program identifiers is a preset second shape, and the P program identifiers are located in a preset area, display the target information; wherein
the target information is associated with both the preset second shape and the preset area;
in a case that the target information comprises the target program interface, different arrangement shapes and display areas are associated with program interfaces of different program accounts of the target program; and
in a case that the target information comprises the target program file, the different arrangement shapes and display areas are associated with program files with different file usage permissions of the target program.

13. The display control apparatus according to claim 8, wherein the display control apparatus further comprises: an obtaining module;
the obtaining module is configured to obtain identity verification information entered by the user; and
the display module is specifically configured to: in a case that the identity verification information matches preset verification information, display the target information; wherein
different display parameters are associated with different preset verification information.

14. The display control apparatus according to claim 8, wherein the first preset condition comprises at least one of the following:
a display ratio of the target program identifier is updated to a preset display ratio;
the display ratio of the target program identifier is updated to the preset display ratio, and an arrangement shape of the target program identifier is a preset shape, wherein the target program identifier comprises at least two program identifiers; and
the display ratio of the target program identifier is updated to the preset display ratio, the arrangement shape of the target program identifier is the preset shape, and the target program identifier is located in a preset area, wherein the target program identifier comprises at least two program identifiers.

15. An electronic device, comprising a processor, a memory, and a program or instruction stored in the memory and executable on the processor, wherein when the program or instruction is executed by the processor, steps of the display control method according to any one of claims 1 to 7 are implemented.

16. A readable storage medium, storing a program or an instruction, wherein when the program or instruction is executed by a processor, steps of the display control method according to any one of claims 1 to 7 are implemented.

17. A chip, wherein the chip comprises a processor and a communication interface, the communication interface is coupled to the processor, and the processor is configured to run a program or an instruction, to perform steps of the display control method according to any one of claims 1 to 7.

18. A computer program product, wherein the computer program product is stored in a non-volatile storage medium, and the computer program product is executed by at least one processor to implement steps of the display control method according to any one of claims 1 to 7.
